# EUROPEAN PATENT APPLICATION

(11) **EP 4 083 103 A1**
(43) Date of publication of application: **02.11.2022**
(21) Application number: 20904390.0
(22) Date of filing: 03.12.2020
(51) Int. Cl.: C08G 59/36, C08K 7/02, C08L 63/00, C08J 5/04

(54) **SHEET MOLDING COMPOUND RESIN COMPOSITION, SHEET MOLDING COMPOUND, MOLDED ARTICLE, AND METHOD FOR PRODUCING SHEET MOLDING COMPOUND**

(30) Priority: 25.12.2019 JP 2019234210
(71) Applicant: DIC Corporation, Tokyo 174-8520 (JP)
(72) Inventor: HITOMI Kazutoshi, Takaishi-shi, Osaka 592-0001 (JP)
(74) Representative: TBK
(86) International application number: PCT/JP2020/044984
(87) International publication number: WO 2021/131571

(57) **Abstract**

A sheet molding compound resin composition containing a thermosetting resin (A), a resin-curing agent (B), and a glycidyl ether (C) including an alkyl group having a carbon atom number of 7 to 14 and a glycidyl group is provided. The sheet molding compound resin composition can be favorably used for a sheet molding compound and a molded article of the sheet molding compound as a result of having excellent impregnating ability with respect to carbon fiber regardless of the resin viscosity.

## Description

### Technical Field

The present invention relates to a sheet molding compound resin composition, a sheet molding compound, a molded article, and a method for producing a sheet molding compound.

### Background Art

So-called FRP which is a thermosetting resin reinforced by a fiber reinforcement is used in various fields, such as industrial components, home equipment members, and automobile members. Further, fiber-reinforced resin composite materials in which thermosetting resins, such as epoxy resins and unsaturated polyester resins, are reinforced by carbon fiber serving as a fiber reinforcement have noticeable features, that is, excellent heat resistance and mechanical strength regardless of light weight, and exploitation in various types of structural uses has been enlarged. In this regard, a sheet molding compound (hereafter also abbreviated as "SMC") has been widely used due to the productivity and the design being applicable to a wide range since discontinuous fibers being used as the fiber reinforcement enlarges an application range of the molded shape compared with continuous fibers, end materials can be reused, a dissimilar element member can be inserted, and so forth.

For the purpose of improving the appearance and the strength of a molded article obtained from such an SMC, an improvement in the moldability and the impregnating ability of the SMC has been researched (refer to, for example, PTL 1). However, the method for producing the SMC by using a heated pressure roll has a problem of insufficient impregnating ability when production is performed by using a high-viscosity epoxy resin.

### Citation List

### Patent Literature

PTL 1: Japanese Unexamined Patent Application Publication No. 2004-35714

### Summary of Invention

### Technical Problem

An issue addressed by the present invention is to provide a sheet molding compound resin composition having excellent impregnating ability with respect to a fiber reinforcement regardless of the resin viscosity.

### Solution to Problem

The present inventors found that a sheet molding compound resin composition containing a thermosetting resin, a resin-curing agent, and a specific glycidyl ether can address the above-described issue, and the present invention was realized.

That is, the present invention relates to a sheet molding compound resin composition containing a thermosetting resin (A), a resin-curing agent (B), and a glycidyl ether (C) including an alkyl group having a carbon atom number of 7 to 14 and a glycidyl group, a sheet molding compound including the same, a molded article, and a method for producing the sheet molding compound.

### Advantageous Effects of Invention

The SMC obtained according to the present invention and a molded article thereof can be favorably used for, for example, automobile members, railcar members, aerospace plane members, ship members, home equipment members, sporting members, light vehicle members, civil engineering and construction members, and exteriors, structures, and the like of OA equipment as a result of having, for example, excellent impregnating ability with respect to the fiber reinforcement.

### Description of Embodiments

A sheet molding compound resin composition according to the present invention contains a thermosetting resin (A), a resin-curing agent (B), and a glycidyl ether (C) including an alkyl group having a carbon atom number of 7 to 14 and a glycidyl group.

Examples of the thermosetting resin (A) include radical-curable resins, such as epoxy resins, vinyl ester resins, vinyl urethane resins, and unsaturated polyester resins, and epoxy resins and vinyl ester resins are preferable. These thermosetting resins may be used alone, or at least two types may be used in combination.

Examples of the epoxy resins include bisphenol type epoxy resins, such as bisphenol A type epoxy resins, bisphenol F type epoxy resins, bisphenol fluorene type epoxy resins, and a biscresol fluorene type, novolac type epoxy resins, such as phenol novolac type epoxy resins and cresol novolac type epoxy resins, oxazolidone-modified epoxy resins, glycidyl ethers of phenols, such as brominated epoxy resins of these resins, glycidyl ethers of polyhydric alcohols, such as trimethylolpropane triglycidyl ether, diglycidyl ethers of bisphenol A alkylene oxide adducts, and diglycidyl ethers of hydrogenated bisphenol A, alicyclic epoxy resins, glycidyl esters, such as phthalic acid diglycidyl ester, tetrahydrophthalic acid diglycidyl ester, diglycidyl-p-oxybenzoic acid, and dimer acid glycidyl ester, glycidyl amines, such as tetraglycidyldiaminodiphenylmethane, triglycidyl-p-aminophenol, and N,N-diglycidylaniline, and heterocyclic epoxy resins, such as triglycidyl isocyanurate. Of these, aromatic epoxy resins are preferable, bifunctional aromatic epoxy resins are more preferable, and bisphenol A type epoxy resins and bisphenol F type epoxy resins are particularly preferable due to more excellent molded article strength and more excellent fluidity of a molding material during molding. In this regard, these epoxy resins may be used alone, or at least two types may be used in combination.

The number average molecular weight of the epoxy resin is preferably 50 to 1,000 and more preferably 100 to 500 since the impregnation ability with respect to the fiber reinforcement is further improved.

The epoxy equivalent of the epoxy resin is preferably within the range of 150 to 1,500 g/eq and more preferably within the range of 170 to 500 g/eq since the strength and the handleability are further improved.

The vinyl ester resin is obtained by reacting the epoxy resin with (meth)acrylic acid, and regarding the epoxy resin, the epoxy resins described above as examples of the thermosetting resin can be used. Of these, bifunctional aromatic epoxy resins are preferable and bisphenol A type epoxy resins and bisphenol F type epoxy resins are more preferable due to having more excellent impregnation ability with respect to the fiber reinforcement. In this regard, these epoxy resins may be used alone, or at least two types may be used in combination.

Regarding the vinyl ester resin, a preferable vinyl ester resin is obtained by a reaction performed at a molar ratio (COOH/EP) of a carboxy group (COOH) of the (meth)acrylic acid to an epoxy group (EP) of the epoxy resin within the range of 0.6 to 1.1. In addition, the epoxy equivalent of the epoxy resin serving as the raw material is preferably within the range of 180 to 370 g/eq and more preferably within the range of 180 to 250 g/eq.

The reaction between the epoxy resin and the (meth)acrylic acid is preferably performed by using an esterification catalyst at 60°C to 140°C. In this regard, a polymerization inhibitor and the like may be used.

It is preferable that the vinyl ester resin be used with an unsaturated monomer in combination. Examples of the unsaturated monomer include monofunctional (meth)acrylate compounds, such as benzyl (meth)acrylate, phenoxyethyl (meth)acrylate, phenoxypolyethylene glycol (meth)acrylate, polyethylene glycol (meth)acrylate alkyl ether, polypropylene glycol (meth)acrylate alkyl ether, 2-ethylhexyl methacrylate, isodecyl (meth)acrylate, lauryl (meth)acrylate, isotridecyl (meth)acrylate, n-stearyl (meth)acrylate, tetrahydrofurfuryl methacrylate, isobornyl (meth)acrylate, dicyclopentenyloxyethyl (meth)acrylate, and dicyclopentenyl methacrylate; di(meth)acrylate compounds, such as ethylene glycol di(meth)acrylate, propylene glycol di(meth)acrylate, 1,4-butanediol di(meth)acrylate, 1,3-butanediol di(meth)acrylate, neopentyl glycol di(meth)acrylate, 1,6-hexanediol di(meth)acrylate, bisphenol di(meth)acrylate, and 1,4-cyclohexanedimethanol di(meth)acrylate; diallylphthalates, divinylbenzenes, and styrene. Of these, since a molding material having higher strength is obtained, unsaturated monomers including an aromatic is preferable, and benzyl methacrylate and phenoxyethyl methacrylate are more preferable. In this regard, these unsaturated monomers may be used alone, or at least two types may be used in combination.

In addition, it is preferable that the vinyl ester resin be used with a polyisocyanate in combination. Examples of the usable polyisocyanate include diphenylmethane diisocyanate (4,4'-form, 2,4'-form, or 2,2'-form or a mixture thereof), modified products of diphenylmethane diisocyanate, such as carbodiimide-modified products, nurate-modified products, biuret-modified products, urethaneimine-modified products, and polyol-modified products which are modified by a polyol, for example, diethylene glycol or dipropylene glycol having a number average molecular weight of 1,000 or less, of diphenylmethane diisocyanate, aromatic polyisocyanates, such as tolylene diisocyanate, tolidine diisocyanate, polymethylene polyphenyl polyisocyanate, xylylene diisocyanate, 1,5-naphthalene diisocyanate, and tetramethylxylene diisocyanate; alicyclic polyisocyanates, such as isophorone diisocyanate, hydrogenated diphenylmethane diisocyanate, hydrogenated xylylene diisocyanate, and norbornene diisocyanate; and aliphatic isocyanates, such as hexamethylene diisocyanate, nurate-modified products, biuret modified products, and adduct forms of hexamethylene diisocyanate, and dimer acid diisocyanates. Of these, aromatic polyisocyanates are preferable since molding materials having excellent handleability (film releasability·tackiness) are obtained. In this regard, these polyisocyanates (C) may be used alone, or at least two types may be used in combination.

The mass ratio (vinyl ester resin/unsaturated monomer) of the vinyl ester resin to the unsaturated monomer in the thermosetting resin (A) is preferably within the range of 40/60 to 85/15 and more preferably within the range of 50/50 to 70/30 since the resin impregnating ability with respect to carbon fiber and the balance between the handleability and the curability are further improved.

The molar ratio (NCO/OH) of the isocyanate group (NCO) of the polyisocyanate in the thermosetting resin (A) to the hydroxy group (OH) of the vinyl ester resin is preferably within the range of 0.5 to 0.95 and more preferably 0.55 to 0.85.

Regarding the resin-curing agent (B), when an epoxy resin is used as the thermosetting resin (A), for example, amine-based compounds, amide-based compounds, acid-anhydride-based compounds, and phenol-based compounds may be used. In addition, when a radical-curable resin such as a vinyl ester is used as the thermosetting resin (A), a polymerization initiator such as an organic peroxide may be used. In this regard, these resin-curing agents may be used alone, or at least two types may be used in combination.

Examples of the amine-based compound include diaminodiphenylmethane, diethylenetriamine, triethylenetetramine, diaminodiphenyl sulfone, isophoronediamine, imidazole, BF3-amine complexes, and guanidine derivatives. Examples of the amide-based compound include dicyandiamide and polyamide resins synthesized from a dimer of linolenic acid and ethylenediamine. Examples of the acid-anhydride-based compound include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride. Examples of the phenol-based compounds include polyvalent phenol compounds, such as phenol novolac resins, cresol novolac resins, aromatic hydrocarbon formaldehyde resin-modified phenol resins, dicyclopentadiene phenol addition type resins, phenol aralkyl resins (ZYLOCK resin), polyvalent phenol novolac resins, represented by resorcin novolac resins, synthesized from a polyvalent hydroxy compound and formaldehyde, naphthol aralkyl resins, trimethylolmethane resins, tetraphenylolethane resins, naphthol novolac resins, naphthol-phenol co-condensation novolac resins, naphthol-cresol co-condensation novolac resins, biphenyl-modified phenol resins (polyvalent phenol compounds in which phenol cores are coupled with a bismethylene group), biphenyl-modified naphthol resins (polyvalent naphthol compounds in which phenol cores are coupled with a bismethylene group), aminotriazine-modified phenol resins (polyvalent phenol compounds in which phenol cores are coupled with melamine, benzoguanamine, or the like), and alkoxy-containing-aromatic-ring-modified novolac resins (polyvalent phenol compounds in which a phenol core and an alkoxy-containing aromatic ring are coupled with formaldehyde). In this regard, these compounds may be used alone, or at least two types may be used in combination.

Of these, amide-based compounds and amine-based compounds are preferable and dicyandiamide and imidazole are more preferable due to having high curability and excellent rapid-curability.

In this regard, the resin-curing agent is preferably 1 to 40 parts by mass relative to 100 parts by mass of the epoxy resin.

A curing accelerator (b1) may be used as a portion of the resin-curing agent (B). Urea compounds are preferable from the viewpoint of enhancing the mechanical characteristics of a molded article, and imidazole compounds are preferable from the viewpoint of enhancing the thermal characteristics (heat resistance) of a fiber-reinforced composite materials. In this regard, these curing accelerators (b1) may be used alone, or at least two types may be used in combination.

Examples of the urea compound include 3-phenyl-1,1-dimethylurea, 3-(3,4-dichlorophenyl)-1,1-dimethylurea, 3-(3-chloro-4-methylphenyl)-1,1-dimethylurea, 2,4-bis(3,3-dimethylureide)toluene, and 1,1'-(4-methyl-1,3-phenylene)bis(3,3-dimethylurea).

Examples of the imidazole compound include imidazole, 2-phenylimidazole, 2-phenyl-4-methylimidazole, 2-methylimidazole, 2-undecylimidazole, 2-heptadecylimidazole, 1,2-dimethylimidazole, 2-ethyl-4-methylimidazole, 2,4-diamino-6-[2'-methylimidazolyl-(1')]-ethyl-s-triazine, 2,4-diamino-6-[2'-methylimidazolyl-(1')]-ethyl-s-triazine isocyanuric acid adducts, 2-phenyl-4,5-dihydroxymethylimidazole, and 2-phenyl-4-methyl-5-hydroxymethylimidazole.

The curing accelerator (b1) is preferably 1 to 40 parts by mass relative to 100 parts by mass of the thermosetting resin.

There is no particular limitation regarding the polymerization initiator, and organic peroxides are preferable. Examples include diacyl peroxide compounds, peroxy ester compounds, hydroperoxide compounds, ketone peroxide compounds, alkyl perester compounds, percarbonate compounds, and peroxyketals, and the organic peroxide can be appropriately selected in accordance with the molding condition. In this regard, these organic peroxides may be used alone, or at least two types may be used in combination.

Of these organic peroxides, it is preferable that a polymerization initiator having a temperature to obtain a half-life of 10 hours is 70°C to 110°C be used for the purpose of reducing the molding time. Being 70°C to 100°C is preferable since the fiber-reinforced molding material has a long life at normal temperature and since curing can be performed by heating in a short time, and more excellent balance between the curability and the moldability is ensured. Examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxydiethylacetate, t-butylperoxyisopropylcarbonate, t-amylperoxyisopropylcarbonate, t-hexylperoxyisopropylcarbonate, di-tert-butylperoxyhexahydroterephthalate, and t-amylperoxytrimethylhexanoate.

The content of the polymerization initiator is preferably within the range of 0.3 to 3% by mass relative to the total amount of the radical-curable resin and the unsaturated monomer since both the curing characteristics and the storage stability are excellent.

The glycidyl ether (C) includes an alkyl group having a carbon atom number of 7 to 14 and a glycidyl group. Examples include octyl glycidyl ether, 2-ethylhexyl glycidyl ether, decyl glycidyl ether, dodecyl glycidyl ether, tridecyl glycidyl ether, and tetradecyl glycidyl ether, and glycidyl ethers including an alkyl group having a carbon atom number of 8 to 13 are preferable since the impregnating ability with respect to a fiber reinforcement is further improved. In this regard, these glycidyl ethers (C) may be used alone, or at least two types may be used in combination.

The glycidyl ether (C) is preferably 0.1 to 30 parts by mass, more preferably 0.2 to 20 parts by mass, and further preferably 0.5 to 10 parts by mass relative to 100 parts by mass of the thermosetting resin (A) since the balance between the impregnating ability and the glass transition temperature is further improved.

The resin composition according to the present invention may contain a component other than the thermosetting resin (A), the resin-curing agent (B), and the glycidyl ether (C). When the epoxy resin is used, it is preferable that an epoxy diluent be used in combination since the viscosity is readily adjusted and since the epoxy equivalent is readily adjusted.

Regarding the epoxy diluent, polyfunctional glycidyl ethers are preferable since the viscosity is reduced while the glass transition temperature is maintained. Examples include neopentyl glycol diglycidyl ether, 1,4-butanediol diglycidyl ether, 1,6-hexanediol diglycidyl ether, ethylene glycol diglycidyl ether, polyethylene glycol diglycidyl ether, propylene glycol diglycidyl ether, polypropylene glycol diglycidyl ether, resorcin diglycidyl ether, glycerol polyglycidyl ether, triglycidyl isocyanurate, trimethylolpropane triglycidyl ether, and tetraglycidyl diphenylmethane.

The viscosity of the epoxy diluent is preferably within the range of 1 to 1,000 mPa·s and more preferably within the range of 1 to 500 mPa·s since the fiber impregnating ability of the resin composition is further improved.

The amount of the epoxy diluent used is preferably within the range of 5 to 2,000 parts by mass relative to 100 parts by mass of the epoxy resin since the adhesion to the fiber reinforcement is favorable.

The resin composition according to the present invention may contain thermoplastic resin particles, thermoplastic resins other than the thermoplastic resin particles, polymerization inhibitors, curing accelerators, fillers, low profile additives, mold release agents, thickeners, viscosity-reducing agents, pigments, antioxidants, plasticizers, flame retardants, antibacterial agents, ultraviolet stabilizer, storage stabilizer, reinforcements, and photo-curing agents.

The thermoplastic resin particle is a resin powder containing an acrylic acid ester, a methacrylic acid ester, or a diene and at least one monomer unit selected from monomers co-polymerizable with these, and the effective component is a thermoplastic resin powder composed of a core layer and a shell layer. Examples of the acrylic acid ester or the methacrylic acid ester used for the component include ethyl (meth)acrylate, n-butyl (meth)acrylate, methyl methacrylate, butyl (meth)acrylate, n-propyl (meth)acrylate, 2-ethylhexyl (meth)acrylate, n-decyl methacrylate, isobutyl (meth)acrylate, n-amyl (meth)acrylate, isoamyl (meth)acrylate, n-hexyl (meth)acrylate, n-octyl (meth)acrylate, and 2-hydroxyethyl (meth)acrylate.

In addition, examples of the diene-based monomer include conjugated-diene-based compounds, such as butadiene, isoprene, 1,3-pentadiene, cyclopentadiene, and dicyclopentadiene, and nonconjugated-diene-based compounds, such as 1,4-hexadiene and ethylidene norbornene.

Examples of the monomer co-polymerizable with these include aromatic vinyl compounds, such as styrene, α-methyl styrene, vinyl toluene, p-t-butylstyrene, and chlorostyrene, acrylamide-based compounds, such as acrylamide, N-methylolacrylamide, and N-butoxydimethylacrylamide, methacrylamide-based compounds, such as methacrylamide, N-methylolmethacrylamide, and N-butoxymethylmethacrylamide, glycidyl acrylate, glycidyl methacrylate, and acrylglycidyl acrylate. The aromatic vinyl compounds are preferable.

The content of the thermoplastic resin particles is preferably 1 to 10 parts by mass relative to 100 parts by mass of the thermosetting resin due to having more favorable thickening properties.

Examples of the thermoplastic resin include polyamide resins, polyethylene terephthalate reins, polybutylene terephthalate resins, polycarbonate resins, urethane resins, polypropylene resins, polyethylene resins, polystyrene resins, acrylic resins, polybutadiene resins, and polyisoprene resins and resins produced by modifying these through copolymerization or the like. In this regard, these thermoplastic resins may be used alone, or at least two types may be used in combination.

The fillers may be inorganic compounds or organic compounds and may be used for adjusting the physical properties, such as the strength, the modulus of elasticity, the impact strength, and the durability against fatigue of the molded article.

Examples of the inorganic compound include calcium carbonate, magnesium carbonate, barium sulfate, mica, talc, kaolin, clay, cerite, asbestos, barite, baryta, silica, silica sand, dolomite limestone, limestone, aluminum fine powders, hollow balloon, alumina, glass powders, aluminum hydroxide, whitish marble, zirconium oxide, antimony trioxide, titanium oxide, molybdenum dioxide, and iron powders.

The organic compounds may be natural polysaccharide powders, such as cellulose or chitin, or synthetic resin powders. Regarding the synthetic resin powder, powders of organic materials composed of hard resins, soft rubbers, elastomers, polymers (copolymers), or the like and particles having a multilayer structure such as a core-shell type may be used. Specific examples include particles composed of butadiene rubber and/or acrylic rubber, urethane rubber, silicon rubber or the like, polyimide resin powders, fluororesin powders, and phenol resin powders. These fillers may be used alone, or at least two types may be used in combination.

Examples of the mold release agent include zinc stearate, calcium stearate, paraffin waxes, polyethylene waxes, carnauba waxes, and fluorine-based compounds. Fluorine-based compounds and paraffin waxes are preferable. These mold release agents may be used alone, or at least two types may be used in combination.

Examples of the thickener include metal oxides and metal hydroxides, such as magnesium oxide, magnesium hydroxide, calcium oxide, and calcium hydroxide, and acrylic-resin-based fine particles, and appropriate selection may be performed in accordance with the handleability of the fiber-reinforced molding material according to the present invention. These thickeners may be used alone, or at least two types may be used in combination.

The viscosity of the resin composition is preferably 1,000 mPa·s or more and more preferably 1,000 to 20,000 mPa·s from the viewpoint of the impregnating ability and the heat resistance. In this regard, the viscosity is set to be a value measured at 25°C by using an E-type viscometer.

In addition, the glass transition temperature (Tg) of the resin composition according to the present invention is preferably 130°C or higher since the heat resistance of the molded article and the mold releasability after pressure molding are further improved. In this regard, the glass transition temperature (Tg) is a value measured by DSC in conformity with JIS K 7121-1987 and specifically indicates a midpoint glass transition temperature (Tmg) read from the differential thermal curve observed when the resin composition is placed in a differential scanning type calorimeter unit, the temperature is increased from -50°C to 250°C under the temperature increase condition of a temperature increase rate of 10°C/min and maintained for 3 min, rapid cooling is performed, and the measurement is performed from -50°C to 250°C under the temperature increase condition of a temperature increase rate of also 10°C/min.

The resin composition according to the present invention is obtained by mixing and dispersing the above-described components by using a mixer, such as a common mixer, an internal mixer, a planetary mixer, a roll mill, a kneader, or an extruder.

The sheet molding compound according to the present invention contains the above-described sheet molding compound resin composition and a fiber reinforcement (D) as indispensable components and has excellent productivity, the variety of designs, dissimilar element joining, and excellent moldability.

Regarding the fiber reinforcement (D), fiber cut into the length of 2.5 to 50 mm is used, and fiber cut into the length of 5 to 40 mm is more preferable since the fluidity in a mold during molding and the appearance and the mechanical properties of the molded article are further improved.

Examples of the fiber reinforcement (D) include glass fiber, carbon fiber, silicon carbide fiber, pulp, hemp, cotton, nylons, polyesters, acrylic, polyurethanes, polyimides, and polyamide fibers composed of aramid or the like, such as Kevlar and Nomex. Of these, carbon fiber is preferable since a high-strength molded article is obtained.

Regarding the carbon fiber, carbon fiber of various types, such as polyacrylonitrile base, pitch base, and rayon base, may be used. Of these, polyacrylonitrile-based carbon fiber is preferable since high-strength carbon fiber is readily obtained.

In this regard, the number of filaments of the fiber bundle serving as the carbon fiber is preferably 1,000 to 60,000 since the resin impregnating ability and the mechanical properties of the molded article are further improved.

The content of the fiber reinforcement (D) in the components of the SMC according to the present invention is preferably within the range of 25% to 80% by mass, more preferably within the range of 40% to 70% by mass, and particularly preferably within the range of 45% to 65% by mass since the mechanical properties of the resulting molded article are further improved. When the fiber content is excessively low, a high-strength molded article is not limited to being obtained, and when the carbon fiber content is excessively high, a high-strength molded article is not limited to being obtained since the molded article may be swelled due to insufficient impregnation of the fiber with the resin.

In this regard, the carbon fiber in the SMC according to the present invention is included in the resin while fibers are arranged in random directions.

Examples of the method for producing the SMC according to the present invention include a method in which the SMC resin composition is applied to carrier films disposed on the upper side and the lower side so as to have a uniform thickness, the fiber reinforcement (D) is interposed between the resin composition on the carrier films disposed on the upper side and the lower side, the entirety is passed between impregnation rolls while a pressure is applied to impregnate the fiber reinforcement (D) with the resin composition, and taking up into the shape of a roll or fanfold-folding is performed. Further, it is preferable that aging at normal temperature or at a temperature of 20°C to 60°C be performed thereafter so as to increase the viscosity. Regarding the carrier film, a polyethylene film, a polypropylene film, a laminate film composed of polyethylene and polypropylene, polyethylene terephthalate, nylon, or the like may be used.

The molded article according to the present invention is obtained from the SMC, and a method for molding the molded article is preferably thermocompression molding from the viewpoint of excellent productivity and excellent design variety.

Regarding the thermocompression molding, for example, a producing method in which a predetermined amount of the SMC is weighed and placed into a mold heated to 110°C to 180°C in advance, mold clamping is performed by a compression molding machine so as to shape a molding material, a molding pressure of 0.1 to 30 MPa is maintained so as to cure the molding material, and, thereafter, a molded article is removed so as to obtain the molded article is used. Regarding a specific molding condition, a molding condition in which a molding pressure of 1 to 10 MPa per mm of the molded article thickness is maintained at a mold temperature of 120°C to 160°C for 1 to 2 min in the mold is preferable, and a molding condition in which a molding pressure of 1 to 10 MPa per mm of the molded article thickness is maintained at a mold temperature of 140°C to 160°C for 30 to 90 sec is more preferable.

The SMC according to the present invention has excellent impregnation ability with respect to the fiber reinforcement and the like, and the resulting molded article may be favorably used for, for example, automobile members, railcar members, aerospace plane members, ship members, home equipment members, sporting members, light vehicle members, civil engineering and construction members, and casings and the like of OA equipment.

### EXAMPLES

The present invention will be described below in further detail with reference to examples, but the present invention is not limited to these examples. In this regard, the epoxy equivalent was measured by a method in conformity with JIS K 7236:2009, and the viscosity of a thermosetting resin at 25°C was measured using an E-type viscometer (TV-22 produced by Toki Sangyo Co., Ltd.). In addition, the average molecular weight was measured under a GPC measurement condition described below.

### [GPC measurement condition]

Measuring apparatus: "HLC-8220 GPC" produced by Tosoh Corporation
Column: guard column "HXL-L" produced by Tosoh Corporation + "TSK-GEL G2000HXL" produced by Tosoh Corporation + "TSK-GEL G2000HXL" produced by Tosoh Corporation + "TSK-GEL G3000HXL" produced by Tosoh Corporation + "TSK-GEL G4000HXL" produced by Tosoh Corporation
Detector: RI (differential refractometer)
Data processing: "GPC-8020 Model II version 4.10" produced by Tosoh Corporation
Measurement condition:
   Column temperature 40°C
   Development solvent tetrahydrofuran
   Flow rate 1.0 ml/min
Standard sample: the following monodisperse polystyrenes having a known molecular weight were used in conformity with the measurement manual of "GPC-8020 Model II version 4.10" above.

### (Polyethylenes used)

"A-500" produced by Tosoh Corporation
"A-1000" produced by Tosoh Corporation
"A-2500" produced by Tosoh Corporation
"A-5000" produced by Tosoh Corporation
"F-1" produced by Tosoh Corporation
"F-2" produced by Tosoh Corporation
"F-4" produced by Tosoh Corporation
"F-10" produced by Tosoh Corporation
"F-20" produced by Tosoh Corporation
"F-40" produced by Tosoh Corporation
"F-80" produced by Tosoh Corporation
"F-128" produced by Tosoh Corporation
Sample: a tetrahydrofuran solution having a sample concentration of 1.0% by mass in terms of resin solid content which was filtered with a microfilter (50 µl)

### (Synthesis example 1: synthesis of Vinyl ester resin (1))

A 2-L flask provided with a thermometer, a nitrogen inlet tube, and an agitator was charged with 677 parts by mass of epoxy resin ("EPICLON 850" produced by DIC Corporation, bisphenol A type epoxy resin, epoxy equivalent of 188), 310 parts by mass of methacrylic acid, and 0.29 parts by mass of t-butylhydroquinone, and the temperature was increased to 90°C in a gas stream in which nitrogen and air was mixed one-to-one. Herein, 0.60 parts by mass of 2-methylimidazole was added, the temperature was increased to 110°C, a reaction was performed for 10 hours so that the acid value became 6 or less, and the reaction was completed. A vinyl ester resin (1) having a hydroxyl value of 217 mgKOH/g was obtained by being removed from a reaction container after cooling to about 60°C was performed.

### (Synthesis example 2: synthesis of Vinyl ester resin (2))

A 2-L flask provided with a thermometer, a nitrogen inlet tube, and an agitator was charged with 656 parts by mass of epoxy resin ("EPICLON 850" produced by DIC Corporation, bisphenol A type epoxy resin, epoxy equivalent of 188), 147 parts by mass of bisphenol A, and 0.4 parts by mass of 2-methylimidazole, the temperature was increased to 120°C, a reaction was performed for 3 hours, and the epoxy equivalent was measured. After the epoxy equivalent reaching predetermined 365 was checked, cooling to about 60°C was performed, 185 parts by mass of methacrylic acid and 0.29 parts by mass of t-butylhydroquinone were charged, and the temperature was increased to 90°C in a gas stream in which nitrogen and air was mixed one-to-one. Herein, 0.18 parts by mass of 2-methylimidazole was added, the temperature was increased to 110°C, a reaction was performed for 10 hours so that the acid value became 6 or less, and the reaction was completed. A vinyl ester resin (2) having a hydroxyl value of 209 mgKOH/g was obtained by being removed from a reaction container after cooling to about 60°C was performed.

### (Example 1: production and evaluation of SMC resin composition (1))

SMC resin composition (1) was obtained by mixing 40 parts by mass of Epoxy resin (1) ("tetraglycidyl diaminodiphenylmethane" produced by Sigma-Aldrich, epoxy equivalent of 110 to 130 g/eq, tetrafunctional aromatic epoxy resin), 40 parts by mass of Epoxy resin (2) ("EPICLON 840 LV" produced by DIC Corporation, bisphenol A type, epoxy equivalent of 178 g/eq, the number of functional groups of 2), 5 parts by mass of epoxy diluent ("XY-622" produced by ANHUI XINYUAN Chemical, 1,4-butanediol diglycidyl ether, epoxy equivalent of 131 g/eq, the number of functional groups: 2), 15 parts by mass of epoxy diluent ("EX-313" produced by NAGASE & CO. LTD., glycelol polyglycidyl ether, the number of functional groups: 2 or more), 2 parts by mass of internal mold release agent ("FB-962" produced by Daikin Industries, Ltd.), 8 parts by mass of resin-curing agent ("DICY7" produced by Mitsubishi Chemical Corporation, dicyandiamide), and 5 parts by mass of curing accelerator ("B-605-IM" produced by DIC Corporation, alkylurea base) using a three-roll mill and mixing 9 parts by mass of thermoplastic resin particle ("F303" produced by Aica Kogyo Company, Limited (poly(meth)acrylic acid ester based organic fine particle) and 2 parts by mass (2.5 parts by mass relative to 100 parts by mass of epoxy resin) of octyl glycidyl ether serving as Glycidyl ether (C). The viscosity of SMC resin composition (1) was 6,480 mPa·s, and the glass transition temperature (Tg) was 137°C.

### [Production of SMC]

A laminate film composed of polyethylene and polypropylene was coated with SMC resin composition (1) obtained as described above so that the average amount of coating was set to be 860 g/m², and thereon, carbon fiber which was carbon fiber roving ("T700SC-12000-50C" produced by Toray Industries, Ltd.) cut into a length of 12.5 mm (hereafter abbreviated as Carbon fiber (1)) was dropped in air so as to ensure uniform thickness without fiber directivity and to ensure the carbon fiber content of 57% by mass. A film similarly coated with SMC resin composition (1) was placed on the resulting Carbon fiber (1), and Carbon fiber (1) was impregnated with the resin. In such an instance, the SMC sheet having a carbon fiber bulkiness of 4 mm was crushed using an impregnation roll with adjusted pressure and clearance so as to have a carbon fiber bulkiness of 3 mm in a first impregnation step and was further crushed using an impregnation roll with adjusted pressure and clearance so as to have a carbon fiber bulkiness of 2 mm in a second impregnation step. Thereafter, an aging step of leaving to stand for 3 hours at 80°C was performed so as to obtain SMC (1). The mass per unit area of SMC (1) was 2 kg/m².

### [Evaluation of impregnation ability of SMC]

The SMC was divided into two parts along a median line between a line parallel to the surface and a line parallel to the back surface of a cross section so as to expose the interior. Subsequently, 30 carbon fiber bundles present in 30 cm of the surface of the exposed interior were arbitrary removed, the masses were measured, and an average value was calculated. The same operation was performed at 5 places so as to measure the fiber mass after impregnation. The resulting fiber mass after impregnation was compared with the mass of unimpregnated fiber, and the impregnation ability was evaluated in accordance with the following criteria. The mass of unimpregnated fiber was set to be an average value of measured masses of 1,000 carbon fibers cut into 12.5 mm. The mass was measured using an analytical electronic balance GR-202 (produced by A&D Company, Limited, weighing unit of 0.01 mg).
5: the fiber mass after impregnation increases by 40% or more compared with the mass of unimpregnated fiber
4: the fiber mass after impregnation increases by 20% or more and less than 40% compared with the mass of unimpregnated fiber
3: the fiber mass after impregnation increases by 10% or more and less than 20% compared with the mass of unimpregnated fiber
2: the fiber mass after impregnation increases by 3% or more and less than 10% compared with the mass of unimpregnated fiber
1: the fiber mass after impregnation increases less than 3% compared with the mass of unimpregnated fiber, or outflow of just the resin at the end portion of the SMC sheet is 30 mm or more

### [Production of molded article]

SMC (1) obtained as described above was pressure-molded with a charge percentage of 75% the projected area of a mold 30 cm square under conditions of a mold temperature of 140°C, a pressure time of 5 min, and an applied pressure of 10 MPa so as to obtain Molded article (1) having a sheet thickness of 2 mm.

### [Evaluation of impregnation ability of molded article]

The cross section of Molded article (1) obtained as described above was observed using a digital microscope VHX-5000 (produced by KEYENCE CORPORATION) at a magnification of 50 times, and the impregnation ability was evaluated in accordance with the following criteria. In this regard, two cross sections in an arbitrary direction and a direction perpendicular to the direction (total of the two directions, a length of 300 mm in each direction) were observed.
- 5:: the number of unimpregnated portions is 2 or less
- 4:: the number of unimpregnated portions is 3 or 4 or less
- 3:: the number of unimpregnated portions is 5
- 2:: the number of unimpregnated portions is 6 to 10
- 1:: the number of unimpregnated portions is 11 or more

### (Examples 2 to 5: production and evaluation of SMC resin compositions (2) to (5))

SMC resin compositions (2) to (5), SMCs (2) to (5), and Molded articles (2) to (5) were obtained in the manner akin to the manner of Example 1 except that octyl glycidyl ether used in Example 1 was changed as presented in Table 1, and each evaluation was performed.

### (Example 6: production and evaluation of SMC resin composition (6))

SMC resin composition (6) was obtained by mixing 22.0 parts by mass of Polyisocyanate (1) ("COSMONATE LL" produced by Mitsui Chemicals & SKC Polyurethanes Inc., aromatic polyisocyanate), 1.2 parts by mass of Polymerization initiator (1) ("Kayacarbon AIC-75" produced by Kayaku Akzo Corporation, organic peroxide), and 0.035 parts by mass of Polymerization inhibitor (1) (parabenzoquinone) into a resin solution in which 48.1 parts by mass of Vinyl ester resin (1) and 11.9 parts by mass of Vinyl ester resin (2) were dissolved in 40.0 parts by mass of phenoxyethyl methacrylate. The viscosity of SMC resin composition (6) was 6,292 mPa·s, and the glass transition temperature (Tg) was 131°C.

### (Comparative examples 1 and 2: production and evaluation of SMC resin compositions (R1) and (R2))

SMC resin compositions (R1) and (R2), SMCs (R1) and (R2), and Molded articles (R1) and (R2) were obtained in the manner akin to the manner of Example 1 except that octyl glycidyl ether used in Example 1 was changed as presented in Table 2, and each evaluation was performed.

Combinations and evaluation results of Examples 1 to 6 and Comparative examples 1 and 2 are presented in Tables 1 and 2.

**[Table 1]**

| Table 1 | Example 1 | Example 2 | Example 3 | Example 4 |
|---|---|---|---|---|
| SMC thermosetting resin composition | (1) | (2) | (3) | (4) |
| Thermosetting resin (A) | Epoxy resin (1) | Epoxy resin (1) | Epoxy resin (1) | Epoxy resin (1) |
| | Epoxy resin (2) | Epoxy resin (2) | Epoxy resin (2) | Epoxy resin (2) |
| Resin-curing agent (B) | dicyandiamide | dicyandiamide | dicyandiamide | dicyandiamide |
| Glycidyl ether (C) | octyl glycidyl ether | octyl glycidyl ether | dodecyl glycidyl ether | dodecyl glycidyl ether |
| Parts by mass of Glycidyl ether (C) relative to 100 parts by mass of Thermosetting resin (A) | 2.5 | 3.8 | 1.3 | 3.8 |
| Viscosity (m·Pas) | 6480 | 6292 | 6650 | 6314 |
| Glass transition temperature (°C) | 137 | 131 | 150 | 144 |
| Impregnation ability of SMC | 3 | 5 | 4 | 4 |
| Impregnation ability of molded article | 5 | 5 | 5 | 5 |

**[Table 2]**

| Table 2 | Example 5 | Example 6 | Comparative example 1 | Comparative example 2 |
|---|---|---|---|---|
| SMC thermosetting resin composition | (5) | (6) | (R1) | (R2) |
| Thermosetting resin (A) | Epoxy resin (1) | Vinyl ester resin (1) | Epoxy resin (1) | Epoxy resin (1) |
| | Epoxy resin (2) | Vinyl ester resin (2) | Epoxy resin (2) | Epoxy resin (2) |
| | | phenoxyethyl methacrylate | | |
| | | Polyisocyanate (1) | | |
| Resin-curing agent (B) | dicyandiamide | Polymerization initiator (1) | dicyandiamide | dicyandiamide |
| Glycidyl ether (C) | tridecyl glycidyl ether | octyl glycidyl ether | propyl glycidyl ether | propyl glycidyl ether |
| Parts by mass of Glycidyl ether (C) relative to 100 parts by mass of Thermosetting resin (A) | 3.8 | 3.8 | 3.8 | 5.5 |
| Viscosity (m·Pas) | 6366 | 2110 | 6147 | 5942 |
| Glass transition temperature (°C) | 153 | 166 | 119 | 109 |
| Impregnation ability of SMC | 4 | 5 | 1 | 1 |
| Impregnation ability of molded article | 5 | 5 | 2 | 1 |

It was ascertained that SMCs and molded articles thereof obtained from the SMC resin compositions according to Examples 1 to 6 had excellent impregnation ability.

On the other hand, Comparative examples 1 and 2 were examples in which a glycidyl ether including an alkyl group having a carbon atom number of 7 to 14 that is an indispensable component of the present invention is not contained, and it was ascertained that the impregnation ability was insufficient.

## Claims

1. A sheet molding compound resin composition comprising a thermosetting resin (A), a resin-curing agent (B), and a glycidyl ether (C) including an alkyl group having a carbon atom number of 7 to 14 and a glycidyl group.

2. The sheet molding compound resin composition according to Claim 1, wherein the viscosity at 25°C is 1,000 mPa ·s or more.

3. The sheet molding compound resin composition according to Claim 1 or Claim 2, wherein the glass transition temperature (Tg) is 130°C or higher.

4. The sheet molding compound resin composition according to any one of Claims 1 to 3, wherein the glycidyl ether (C) is a straight chain glycidyl ether having a carbon atom number of 13 to 15.

5. A sheet molding compound comprising the sheet molding compound resin composition according to any one of Claims 1 to 4 and a fiber reinforcement (D).

6. A molded article of the sheet molding compound according to Claim 5.

7. A method for producing a sheet molding compound comprising the step of further performing aging after a fiber reinforcement (D) is included in the sheet molding compound resin composition according to any one of Claims 1 to 4.
